# EUROPEAN PATENT APPLICATION

(11) **EP 4 335 818 A1**
(43) Date of publication of application: **13.03.2024**
(21) Application number: 23173078.9
(22) Date of filing: 12.05.2023
(51) Int. Cl.: C01B 25/37, C01B 25/45, H01M 4/58, H01M 10/54

(54) **RECYCLING AND REWORKING METHOD OF LITHIUM IRON PHOSPHATE CATHODE MATERIAL**

(30) Priority: 08.09.2022 TW 111134107
(71) Applicant: Advanced Lithium Electrochemistry Co., Ltd., Taoyuan City 330 (TW)
(72) Inventor: Hsieh, Han-Wei, 330 Taoyuan City (TW); Li, Yi-Ting, 330 Taoyuan City (TW)
(74) Representative: 2K Patentanwälte Blasberg Kewitz & Reichel

(57) **Abstract**

A recycling and reworking method of a lithium iron phosphate cathode material is disclosed and includes steps of (a) providing a lithium iron phosphate recycled material; (b) oxidizing the lithium iron phosphate recycled material in an atmosphere at an oxidation temperature ranged from 300°C to 400°C for 1 hour to 5 hours to form a raw material powder composed of LiFePO₄, Fe₇(PO₄)₆, Fe₂O₃ and a residual carbon ranged from 0.07 wt.% to 0.6 wt.%; (c) grinding the raw material powder; (d) adjusting the composition of the raw material powder to form a precursor, which has the molar ratio of Li:P = 0.99∼1.05:1, and the molar ratio of Fe:P= 0.98∼1.02:1, wherein a carbon source is added; and (e) heat-treating the precursor in an inert gas at a sintering temperature ranged from 500° C to 800° C for 8 hours to 12 hours to form a lithium iron phosphate regenerated material.

## Description

### FIELD OF THE INVENTION

The present disclosure relates to a secondary battery, and more particularly to a recycling and reworking method of a lithium iron phosphate cathode material for a secondary battery.

### BACKGROUND OF THE INVENTION

Lithium-ion battery is a secondary battery that can be recharged and discharged repeatedly. With the lithium ions to be moved between the positive electrode and the negative electrode, the charging and discharging work of the secondary battery is completed. Therefore, lithium-ion batteries need to use an intercalated lithium compound as the electrode material. The cathode materials used in traditional lithium-ion batteries are mainly lithium cobalt oxide (LiCoO₂), lithium manganate (LiMn₂O₄), lithium nickelate (LiNiO₂) and lithium iron phosphate (LiFePO₄). Among them, the lithium iron phosphate battery having the olivine structure as the cathode material is widely used in electric vehicles and energy storage equipment because of its good safety, large specific capacity, long cycle life, high temperature resistance and low cost.

In recent years, with the extensive application of lithium-ion batteries in the electric vehicles and energy storage equipment, the prices of related raw materials such as the olivine-structured cathode materials have undergone drastic changes. Therefore, as the demand continues to increase in the future, it is even more important to rework the defective products produced in the material production process and the olivine-structured cathode materials recovered from the waste batteries. However, since the surface of the olivine-structured cathode material is generally coated with a conductive carbon coating layer, this carbon coating layer will affect the material and the structure during material regeneration and manufacturing, and cause recycling problems. On the other hand, the cathode material may also produce defective products during the mass production process, and the defective products also need to be regenerated and remanufactured.

Therefore, there is a need to provide a recycling and reworking method of a lithium iron phosphate cathode material for a secondary battery, so as to recycle and remanufacture the defective products in the recycling or mass production process, generate the lithium iron phosphate regenerated materials that meet the product specifications, avoid the material waste, and obviate the drawbacks encountered by the prior arts.

### SUMMARY OF THE INVENTION

An object of the present disclosure is to provide a recycling and reworking method of a lithium iron phosphate cathode material for a secondary battery. The defective products in the recycling or mass production process are regenerated and remanufactured to generate the lithium iron phosphate regenerated materials that meet the product specifications, avoid the material waste, and reach the value of recycling the lithium iron phosphate cathode material.

Another object of the present disclosure is to provide a recycling and reworking method of a lithium iron phosphate cathode material for a secondary battery. Since the defective semi-finished products or the defective finished products are recycled or taken from the mass production process, the resynthesized materials are greatly affected by the composition purity and the residual carbon content of the lithium iron phosphate. In the present disclosure, the raw powder easy to control is formed through an oxidation step in an atmospheric atmosphere. Preferably, the residual carbon content of the oxidized raw material powder is reduced to range from 0.07 wt. % to 0.6 wt. %, and the proportion of lithium, iron, and phosphorus components in the raw material powder resynthesized is not affected. The raw material powder oxidized with the reduced residual carbon content, is further produced through grinding and dispersing, component adjustment, granulation, sintering and other processes to form lithium iron phosphate regenerated materials, which meet the specification requirements of the lithium iron phosphate cathode material for the secondary battery. Furthermore, a mixture of amorphous iron phosphate and lithium salt is added as an auxiliary agent. It is more helpful to improve the powder fluidity of the precursor after spray granulation. On the other hand, when the residual carbon content of the raw material powder is ranged from 0.2 wt.% to 0.4 wt.%, the addition of auxiliary agent can also be omitted. After the precursor is subjected to a two-stage high-temperature sintering process, the lithium iron phosphate regenerated material is formed to meet the product specifications, and the required carbon coating content of less than 1.6 wt.% is obtained at the same time.

A further object of the present disclosure is to provide a recycling and reworking method of a lithium iron phosphate cathode material for a secondary battery. The lithium iron phosphate materials out of product specifications are regenerated and produced through the powder oxidation, grinding and dispersing, composition adjustment, drying, sintering and other processes in the present disclosure, to form the lithium iron phosphate regenerated materials meeting the product specifications, and the required carbon coating content less than 1.6 wt. % is obtained at the same time. The grinding and dispersing, drying, and sintering for the lithium iron phosphate regenerated materials can be combined with the actual mass production process for the regular lithium iron phosphate cathode material on the mass production line. In this way, the recycling and reworking are completed with the minimum production cost. The product yield of the lithium iron phosphate cathode material is improved, and the waste of materials or the problem of environmental pollution is avoided. The lithium iron phosphate regenerated materials that meet product specifications are further commercialized by sieving, crushing, self-mixing and electromagnetic separation to enhance product competitiveness.

In accordance with an aspect of the present disclosure, a recycling and reworking method of a lithium iron phosphate cathode material for a secondary battery is provided and includes steps of: (a) providing a lithium iron phosphate recycled material; (b) oxidizing the lithium iron phosphate recycled material in an atmosphere, wherein the lithium iron phosphate recycled material is treated at an oxidation temperature ranged from 300°C to 400°C for 1 hour to 5 hours to form a raw material powder, wherein the raw material powder is composed of LiFePO₄, Fe₇(PO₄)₆, Fe₂O₃ and a residual carbon, and the weight percentage of the residual carbon in the raw material powder is ranged from 0.07 wt.% to 0.6 wt.%; (c) grinding the raw material powder; (d) adjusting the composition of the raw material powder to form a precursor, which has the molar ratio of Li:P = 0.99-1.05:1, and the molar ratio of Fe:P= 0.98-1.02:1, wherein a carbon source is added; and (e) heat-treating the precursor in an inert gas at a sintering temperature ranged from 500° C to 800° C for 8 hours to 12 hours to form a lithium iron phosphate regenerated material.

In an embodiment, the raw material power after grinding in the step (c) has an average particle diameter ranged from 0.4 µm to 1.2 µm.

In an embodiment, the step (d) further includes a step of: (d1) adding an auxiliary agent, wherein the auxiliary agent has a weight percentage ranged from 3 wt.% to 15 wt.% relative to the precursor.

In an embodiment, the auxiliary agent has the molar ratio of Li:P = 0.99-1.05:1, and the molar ratio of Fe:P= 0.98-1.02:1.

In an embodiment, the auxiliary agent is a mixture of amorphous iron phosphate and lithium salt.

In an embodiment, the sintering temperature includes a first sintering temperature and a second sintering temperature, the precursor is treated at the first sintering temperature for 3 hours to 5 hours and then treated at the second sintering temperature for 3 hours to 5 hours to form the lithium iron phosphate regenerated material, the first sintering temperature is ranged from 500°C to 600°C, and the second sintering temperature is ranged from 700°C to 800°C.

In an embodiment, the lithium iron phosphate regenerated material has a carbon content less than or equal to 1.6 wt.%.

In an embodiment, the step (b) further includes a step of (b1) analyzing the weight percentage of Li, Fe, P and the residual carbon in the raw material powder.

In an embodiment, the step (c) is implemented through a wet grinding process, and the step (d) further includes a step of (d1) drying the precursor.

In an embodiment, the weight percentage of the residual carbon in the raw material powder is ranged from 0.2 wt.% to 0.4 wt.%, and the step (d1) is implemented through a spray granulation process.

In an embodiment, the carbon source is one selected from the group consisting of a fructose, a rock sugar, a sucrose, a glucose, a cyclodextrin, a citric acid, a polyvinylpyrrolidone, a polyvinyl alcohol, a polyethylene glycol and a combination thereof.

### BRIEF DESCRIPTION OF THE DRAWINGS

The above contents of the present disclosure will become more readily apparent to those ordinarily skilled in the art after reviewing the following detailed description and accompanying drawings, in which:
FIG. 1 is a flow chart showing a recycling and reworking method of a lithium iron phosphate cathode material for a secondary battery according to an embodiment of the present disclosure;
FIG. 2 shows the XRD analysis result of the raw material powder in the recovery and reworking method of the lithium iron phosphate cathode material for the secondary battery according the embodiment of the present disclosure;
FIG. 3 shows the XRD analysis result of the lithium iron phosphate regenerated material obtained by the recovery and reworking method of the lithium iron phosphate cathode material for the secondary battery according to the embodiment of the present disclosure;
FIGS. 4A to 4C are SEM photos showing the precursors in Example 1 to Example 3 of the present disclosure, respectively;
FIGS. 5A to 5B are SEM photos showing another precursor after spray granulation process with 10 wt.% of the auxiliary agent added;
FIGS. 6A to 6B are SEM photos showing another precursor after spray granulation process with 5 wt.% of the auxiliary agent added;
FIGS. 7A to 7B are SEM photos showing another precursor after spray granulation process with 3 wt.% of the auxiliary agent added;
FIGS. 8A to 8C are SEM photos shown the precursors before granulation in Example 4 to Example 6 of the present disclosure, respectively;
FIG. 9A is a SEM photo showing the lithium iron phosphate regenerated material obtained in Example 7 of the present disclosure;
FIG. 9B is a SEM photo showing the lithium iron phosphate regenerated material obtained in Example 8 of the present disclosure;
FIG. 9C is a SEM photo showing the lithium iron phosphate regenerated material obtained in Example 9 of the present disclosure;
FIG. 9D is a SEM photo showing the lithium iron phosphate regenerated material obtained in Example 10 of the present disclosure;
FIGS. 10A to 10C are SEM photos showing the lithium iron phosphate regenerated material obtained in Example 14 of the present disclosure;
FIGS. 11A to 11C are SEM photos showing the lithium iron phosphate regenerated material obtained in Example 15 of the present disclosure;
FIGS. 12A to 12B are SEM photos showing the lithium iron phosphate regenerated material obtained in Example 16 of the present disclosure; and
FIGS. 13A to 13B are SEM photos showing the lithium iron phosphate regenerated material obtained in Example 17 of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed. For example, the formation of a first feature over or on a second feature in the description that follows may include embodiments in which the first and second features are formed in direct contact, and may also include embodiments in which additional features may be formed between the first and second features, such that the first and second features may not be in direct contact. In addition, the present disclosure may repeat reference numerals and/or letters in the various examples. This repetition is for the purpose of simplicity and clarity and does not in itself dictate a relationship between the various embodiments and/or configurations discussed. Further, spatially relative terms, such as "inner," "outer," "high," "low" and the like, may be used herein for ease of description to describe one element or feature's relationship to another element(s) or feature(s) as illustrated in the figures. The spatially relative terms are intended to encompass different orientations of the device in use or operation in addition to the orientation depicted in the figures. The apparatus may be otherwise oriented (rotated 90 degrees or at other orientations) and the spatially relative descriptors used herein may likewise be interpreted accordingly. When an element is referred to as being "connected," or "coupled," to another element, it can be directly connected or coupled to the other element or intervening elements may be present. Although the wide numerical ranges and parameters of the present disclosure are approximations, numerical values are set forth in the specific examples as precisely as possible. In addition, although the "first," "second," "third," and the like terms in the claims be used to describe the various elements can be appreciated, these elements should not be limited by these terms, and these elements are described in the respective embodiments are used to express the different reference numerals, these terms are only used to distinguish one element from another element. For example, a first element could be termed a second element, and, similarly, a second element could be termed a first element, without departing from the scope of example embodiments. Besides, "and / or" and the like may be used herein for including any or all combinations of one or more of the associated listed items. Alternatively, the word "about" means within an acceptable standard error of ordinary skill in the art-recognized average. In addition to the operation / working examples, or unless otherwise specifically stated otherwise, in all cases, all of the numerical ranges, amounts, values and percentages, such as the number for the herein disclosed materials, time duration, temperature, operating conditions, the ratio of the amount, and the like, should be understood as the word "about" decorator. Accordingly, unless otherwise indicated, the numerical parameters of the present invention and scope of the appended patent proposed is to follow changes in the desired approximations. At least, the number of significant digits for each numerical parameter should at least be reported and explained by conventional rounding technique is applied. Herein, it can be expressed as a range between from one endpoint to the other or both endpoints. Unless otherwise specified, all ranges disclosed herein are inclusive.

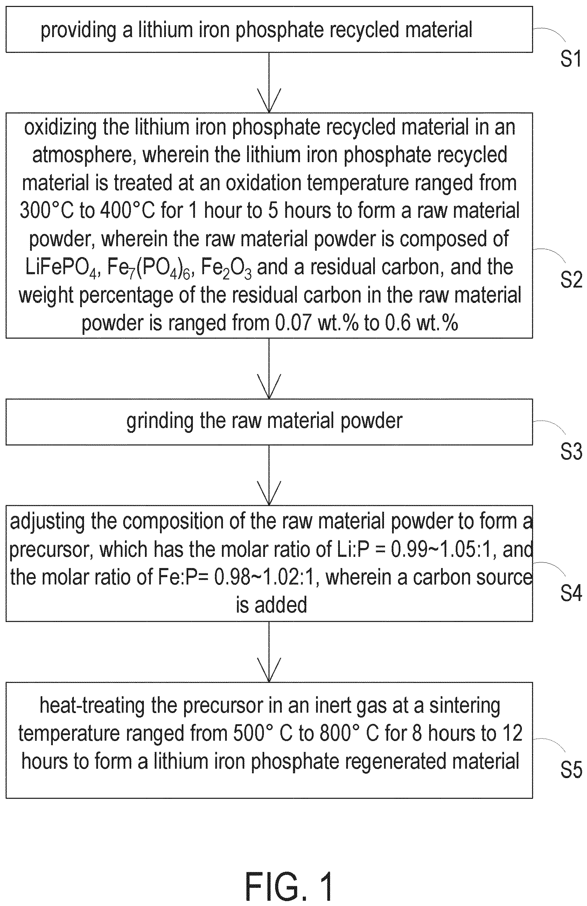

FIG. 1 is a flow chart showing a recycling and reworking method of a lithium iron phosphate cathode material for a secondary battery according to an embodiment of the present disclosure. Notably, the recycling and reworking method of the lithium iron phosphate cathode material for the secondary batteries in the present disclosure is used to produce the lithium iron phosphate cathode materials with carbon coating for the secondary battery. Certainly, the application of lithium iron phosphate cathode material is not limited to secondary batteries.

Firstly, in the step S1, a lithium iron phosphate recycled material is provided. Preferably but not exclusively, the lithium iron phosphate recycled material generally refers to the defective product recycled from the waste battery or obtained in the mass production process. Since the defective product does not meet the actual product specification requirements, the defective product needs to be recycled and reworked. In other words, the main component of recycled lithium iron phosphate is the defective lithium iron phosphate, which contains carbon coating with an indeterminate content. Preferably but not exclusively, in one embodiment, the lithium iron phosphate recycled material is a defective semi-finished product or a defective finished product generated in the actual mass production process. Since the defective semi-finished product or the defective finished product is out of the process specification, it must be recycled and reworked. However, the semi-finished product or the finished product generated in the manufacturing process includes the lithium iron phosphate precursors or carbon-coated lithium iron phosphate materials as the main component. Without the limitation of particle size and crystal phase, the lithium iron phosphate recycled material is suitable for recycling and reworking through the method of the present disclosure. Preferably but not exclusively, in another embodiment, the lithium iron phosphate recycled material provided is the lithium iron phosphate cathode material recycled from the waste battery. Preferably but not exclusively, the lithium iron phosphate recycled material provided includes the lithium iron phosphate cathode electrode material without the binder. Preferably but not exclusively, the lithium iron phosphate recycled material provided has an olivine structure or a carbon coating. Notably, since the main component of the binder used in the cathode material is polyvinylidene difluoride (PVDF) or other types of polymer materials, the binder may cause interference when the carbon coating is removed, or affect the control of the carbon content. Therefore, the binder needs to be removed by physical or chemical means firstly. Certainly, the present disclosure is not limited thereto.

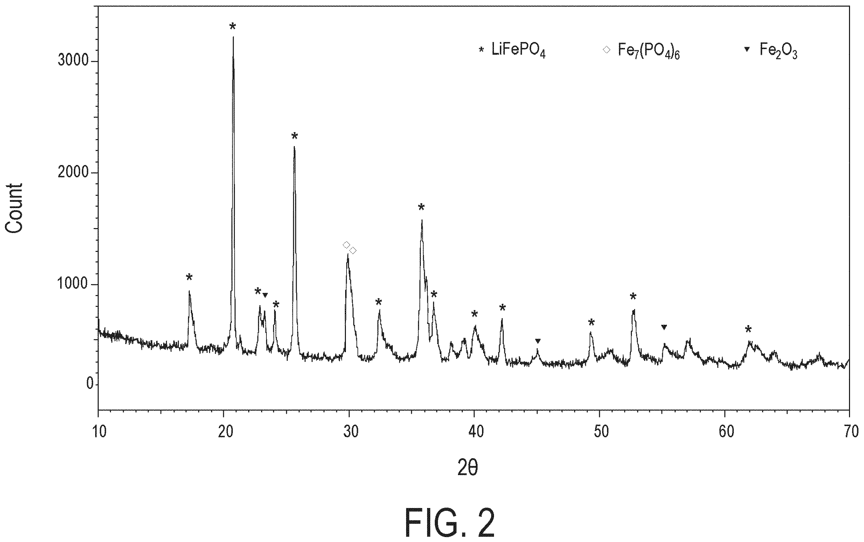

Then, as shown in the step S2, the lithium iron phosphate recycled material is oxidized in an atmosphere. In the embodiment, the lithium iron phosphate recycled material is treated at an oxidation temperature for 1 hour to 5 hours to form a raw material powder. Preferably but not exclusively, the oxidation temperature is ranged from 300°C to 400°C. Preferably, the lithium iron phosphate recycled material is treated at 350°C for 2 hours, so as to obtain a lower residual carbon content. In this way, the raw material powder after oxidation treatment can be analyzed by XRD, and it is known that the raw material power is composed of LiFePO₄, Fe₇(PO₄)₆, and Fe₂O₃, as shown in FIG. 2. The raw material power further includes a residual carbon. In addition, according to the analysis of the carbon content, the raw material powder is formed after the lithium iron phosphate recycled material is oxidized, and the weight percentage of the residual carbon in the raw material powder can be controlled to range from 0.07 wt.% to 0.6 wt.%. Certainly, in other embodiments, the residual carbon content of the raw material powder can be controlled to range from 0.2 wt.% to 0.4 wt.%, for example, and it is helpful to control the process parameters of subsequent recycling and reworking. Certainly, the present disclosure is not limited thereto. Furthermore, the weight ratio of Li, Fe, and P in the raw material powder can also be obtained through ICP analysis, so as to re-adjust the molar ratio in the subsequent process.

In the step S3, the raw material powder after the oxidation treatment is further dispersed through a wet grinding process. Moreover, in the step S4, the composition of the raw material powder is further adjusted to form a precursor of lithium iron phosphate. Notably, the step S3 and the step S4 may be performed in stages or simultaneously. Preferably but not exclusively, in an embodiment, the raw material powder is ground firstly, and then the composition of the raw material powder is adjusted, and then the grinding and dispersion are performed. The present disclosure is not limited thereto. In the embodiment, the raw material powder or the precursor after grinding in the step S3 has an average particle diameter ranged from 0.4 µm to 1.2 µm. Preferably, the average particle diameter is ranged from 0.4 µm to 0.6 µm. Furthermore, regarding the precursor formed in step S4, the precursor has the molar ratio of Li:P=0.99~1.05:1, and the molar ration of Fe:P=0.98-1.02:1. Moreover, preferably but not exclusively, in the embodiment, a carbon source is added to the precursor, so as to form a carbon-coated lithium iron phosphate cathode by the carbon source and the precursor collaboratively in subsequent processes. Preferably but not exclusively, in the embodiment, the carbon source is one selected from the group consisting of a fructose, a rock sugar, a sucrose, a glucose, a cyclodextrin, a citric acid, a polyvinylpyrrolidone, a polyvinyl alcohol, a polyethylene glycol and a combination thereof. Moreover, in the embodiment, the precursor after wet grinding and dispersion is further dried by a spray granulation process to form a powder of the precursor, which has good fluidity and is convenient for the subsequent processing.

Moreover, in the embodiment, after granulation of the above-mentioned precursor in the step S4, an auxiliary agent of 3 wt.%~15 wt.% is added as a binder for granulation, so as to increase the fluidity of the powder. Preferably but not exclusively, the auxiliary agent is selected from a mixture of amorphous iron phosphate and lithium salt in the mass production line. In addition, the auxiliary agent has the molar ratio of Li:P =0.99~1.05:1, and the molar ratio of Fe:P=0.98-1.02:1. In that, the function of the binder is provided, and the molar ratio of Li:Fe:P=0.99-1.05:0.98-1.02:1 is maintained in the precursor. Furthermore, in other embodiments, when the raw material powder used has a weight percentage range of residual carbon relative to the raw material powder in the range of 0.2 wt.% to 0.4 wt.%, the addition of auxiliary agents can be omitted. It allows to obtain the precursor powders with good fluidity through the spray granulation process directly. Certainly, the present disclosure is not limited thereto.

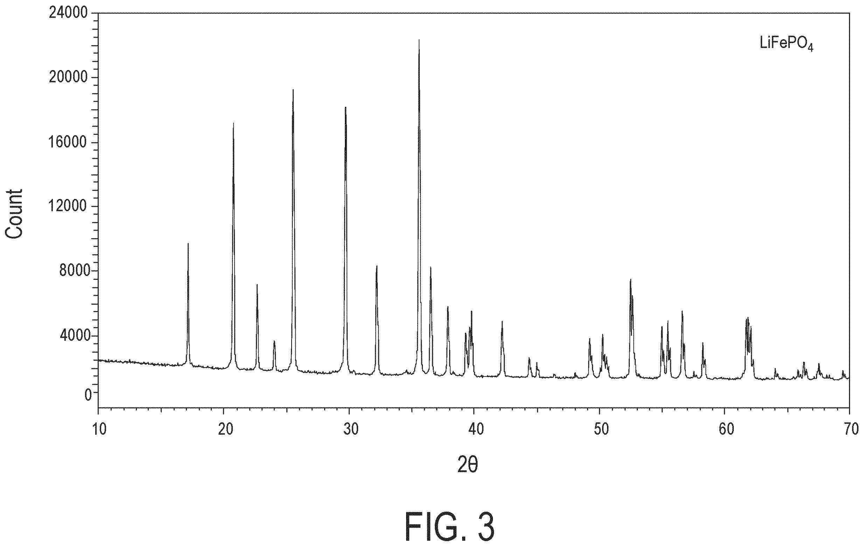

Finally, as shown in the step S5, the precursor is sintered in an inert gas. Preferably but not exclusively, the precursor is heat-treated at a sintering temperature ranged from 500° C to 800° C for 8 hours to 12 hours to form a lithium iron phosphate regenerated material. Furthermore, the lithium iron phosphate regenerated material includes a carbon coating with a carbon content less than or equal to 1.6 wt.%. In the embodiment, the sintering temperature further includes a first sintering temperature and a second sintering temperature. The precursor is treated at the first sintering temperature for 3 hours to 5 hours and then treated at the second sintering temperature for 3 hours to 5 hours to form the lithium iron phosphate regenerated material that meets the actual product specification requirements. Preferably but not exclusively, the first sintering temperature is ranged from 500°C to 600°C, and the second sintering temperature is ranged from 700°C to 800°C. In this way, the precursor with added carbon source can be analyzed through XRD after sintering, and it is known that the composition of the lithium iron phosphate regenerated material is composed of LiFePO₄, as shown in FIG. 3, and a carbon coating is contained. Preferably but not exclusively, in the embodiment, the lithium iron phosphate regenerated material after sintering is commercialized by, for example, sieving, crushing, self-mixing and electromagnetic separation. Notably, in the embodiment, the sintering conditions of the step S5 are for example combined with the mass production sintering of the normal lithium iron phosphate cathode material. It helps to improve the product yield of the lithium iron phosphate cathode material, and avoids the waste of materials or the problem of environmental pollution.

From the above, it allows to produce the lithium iron phosphate recycled material taken from the recycled battery recycling or the on-line process defective products to form the lithium iron phosphate regenerated material through the powder oxidation, grinding and dispersion, component adjustment, drying, sintering and other processes in the present disclosure. The lithium iron phosphate regenerated material meets the specification requirements of the lithium iron phosphate cathode material for the secondary battery. At the same time, the required carbon coating content less than 1.6 wt.% is obtained. The waste of materials is avoided, and the value of recycling lithium iron phosphate cathode materials is achieved is reached.

In Example 1, a quantitative lithium iron phosphate recycled material is oxidized at 350° C for 3 hours in the atmosphere. The residual carbon content of the raw material powder obtained is 0.4 wt.%. Then, the raw material powder is ground, and the lithium source and the iron source in an appropriate amount are added to adjust the composition of the raw material powder, to form a precursor before sintering. The precursor has an average particle diameter of about 0.84 µm. Preferably, the precursor contains 10 wt.% of the auxiliary agent. Moreover, the fructose is added to the precursor as a carbon source. It should be noted that the carbon content of the lithium iron phosphate regenerated material is greater than the residual carbon content of the raw material powder. In the embodiment, the target carbon content of the lithium iron phosphate generated material is 1.4 wt.%, and greater than the residual carbon content of 0.4 wt. % of the raw material powder, so that the dosage of the fructose as the carbon source is about 6~8 g/mol. Certainly, the carbon coating content of the lithium iron phosphate regenerated material is only an example, preferably less than 1.6 wt.%, but not limited thereto. Thereafter, the precursor with the carbon source added is heat-treated at 550°C for 4 hours and 700°C for 4 hours in an inert gas, and the lithium iron phosphate generated material is obtained. The specific surface area, carbon content and electrical analysis results of Example 1 are shown in Table 1.

**Table 1**

| Example # | Raw material powder | | Precursor | | | Lithium iron phosphate regenerated material | | | | | |
|---|---|---|---|---|---|---|---|---|---|---|---|
| | Oxidation °C-Hr | Residual carbon wt. % | Auxiliary agent wt. % | D₅₀ µm | Sintering °C-Hr | Specific surface area m²/g | C% wt. % | 0.1 CC mAh/g | 0.1CD mAh/g | 1CC mAh/g | 2CD mAh/g |
| 1 | 350-3H | 0.4 | 10 | 0.84 | 550-4H +700-4H | 11.63 | 1.39 | 159 | 158 | 128 | 127 |
| 2 | 350-3H | 0.4 | 5 | 0.76 | 550-4H +700-4H | 11.21 | 1.35 | 157 | 158 | 127 | 128 |
| 3 | 350-3H | 0.29 | 3 | 0.82 | 550-4H +700-4H | 10.2 | 1.26 | 156 | 155 | 119 | 120 |
| 4 | 300-2H | 0.2 | 10 | 1.15 | 550-4H +700-4H | 12.37 | 1.52 | 157 | 159 | 130 | 132 |
| 5 | 300-2H | 0.2 | 10 | 0.75 | 550-4H +700-4H | 11.44 | 1.46 | 162 | 161 | 133 | 133 |
| 6 | 300-2H | 0.2 | 10 | 0.49 | 550-4H +700-4H | 14.2 | 1.49 | 157 | 158 | 127 | 131 |
| 7 | 350-3H | 0.1 | 10 | 0.75 | 550-4H +700-4H | 12.21 | 1.49 | 156 | 155 | 124 | 119 |
| 8 | 350-3H | 0.1 | 10 | 0.75 | 550-4H +750-3H | 11.12 | 1.47 | 160 | 158 | 122 | 123 |
| 9 | 350-3H | 0.1 | 10 | 0.75 | 550-4H +700-4H +550-4H | 13.01 | 1.51 | 158 | 158 | 121 | 122 |
| 10 | 350-3H | 0.1 | 10 | 0.75 | 550-4H +750-3H +550-5H | 12.1 | 1.5 | 155 | 156 | 120 | 122 |
| 11 | 350-3H | 0.35 | 0 | 0.88 | 550-4H +700-4H | 8.59 | 1.13 | 155 | 154 | 119 | 117 |
| 12 | 350-3H | 0.35 | 0 | 0.88 | 550-4H +700-4H | 8.23 | 1.08 | 155 | 155 | 119 | 119 |
| 13 | 350-3H | 0.4 | 0 | 0.83 | 550-4H +700-4H | 9.35 | 1.14 | 156 | 155 | 121 | 119 |
| 14 | 350-3H | 0.4 | 10 | 0.8 | 550-4H +700-4H | 12.78 | 1.63 * | 159 | 157 | 125 | 125 |
| 15 | 350-3H | 0.18 | 10 | 0.88 | 550-4H +700-4H | 12.81 | 1.41 | 156 | 156 | 116 | 115 |
| 16 | 350-3H | 0.35 | 10 | 0.86 | 550-4H +700-4H | 10.34 | 1.33 | 153 | 152 | 116 | 115 |
| 17 | 350-3H | 0.4 | 10 | 0.84 | 550-4H +700-4H | 9.53 | 1.28 | 159 | 151 | 108 | 107 |
| 18 | 350-3H | 0.078 | 3 | 0.45 | 550-4H +700-4H | 13.43 | 1.29 | 163 | 157 | 159 | 127 |
| 19 | 350-3H | 0.078 | 3 | 0.45 | 750-3H | 12.23 | 1.23 | 166 | 156 | 159 | 124 |
| 20 | 350-3H | 0.078 | 3 | 0.399 | 750-3H | 10.41 | 1.07 | 163 | 151 | 156 | 114 |
| 21 | 350-3H | 0.078 | 3 | 0.55 | 550-4H +700-4H | 11.36 | 1.12 | 162 | 152 | 156 | 119 |
| 22 | 350-3H | 0.078 | 3 | 0.55 | 550-4H +650-3H +700-3H | 11.5 | 1.2 | 161 | 154 | 156 | 118 |

In Example 2, a quantitative lithium iron phosphate recycled material is oxidized at 350° C for 3 hours in the atmosphere. The residual carbon content of the raw material powder obtained is 0.4 wt.%. Then, the raw material powder is ground, and the lithium source and the iron source in an appropriate amount are added to adjust the composition of the raw material powder, to form a precursor before sintering. The precursor has an average particle diameter of about 0.76 µm. Preferably, the precursor contains 5 wt.% of the auxiliary agent. Moreover, the fructose is added to the precursor as a carbon source. Thereafter, the precursor with the carbon source added is heat-treated at 550°C for 4 hours and 700°C for 4 hours in an inert gas, and the lithium iron phosphate generated material is obtained. The specific surface area, carbon content and electrical analysis results of Example 2 are shown in Table 1.

In Example 3, a quantitative lithium iron phosphate recycled material is oxidized at 350° C for 3 hours in the atmosphere. The residual carbon content of the raw material powder obtained is 0.29 wt.%. Then, the raw material powder is ground, and the lithium source and the iron source in an appropriate amount are added to adjust the composition of the raw material powder, to form a precursor before sintering. The precursor has an average particle diameter of about 0.82 µm. Preferably, the precursor contains 3 wt.% of the auxiliary agent. Moreover, the fructose is added to the precursor as a carbon source. Thereafter, the precursor with the carbon source added is heat-treated at 550°C for 4 hours and 700°C for 4 hours in an inert gas, and the lithium iron phosphate generated material is obtained. The specific surface area, carbon content and electrical analysis results of Example 3 are shown in Table 1.

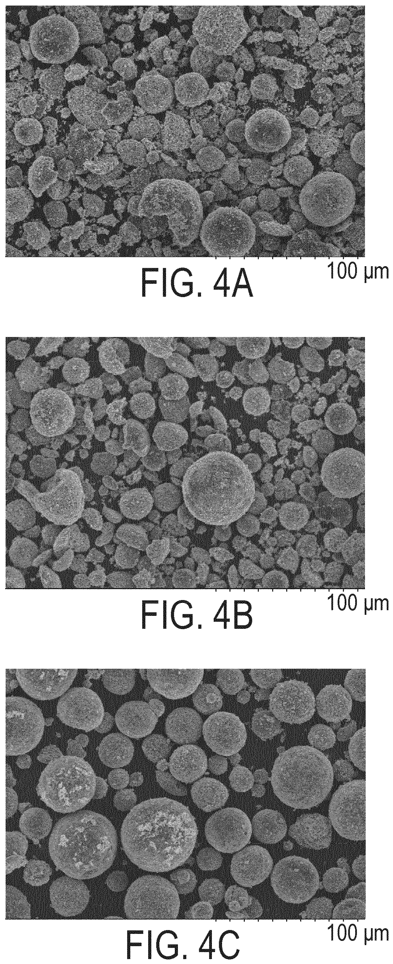

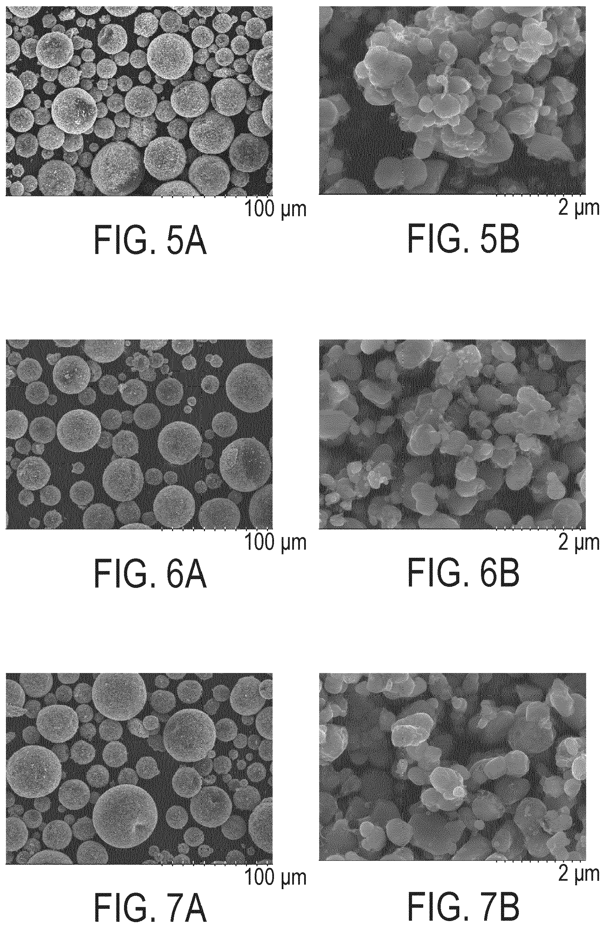

It should be noted that the precursors in Example 1 to Example 3 contain the auxiliary agents in different contents, respectively. The purpose of that is to make the precursor in the spray granulation procedure before the sintering treatment to keep the better integrity of particles. FIGS. 4A to 4C are SEM photos showing the precursors in Example 1 to Example 3 of the present disclosure, respectively. As shown in FIGS. 4A to 4C, when the precursor is added with 10 wt.%, 5 wt.% or 3 wt.% of the auxiliary agent as the binder required for granulation, it is helpful for spray granulation, and the powder fluidity of the precursor after granulation is increased. Moreover, FIGS. 5A to 5B are SEM photos showing another precursor after spray granulation process with 10 wt.% of the auxiliary agent added. FIGS. 6A to 6B are SEM photos showing another precursor after spray granulation process with 5 wt.% of the auxiliary agent added. FIGS. 7A to 7B are SEM photos showing another precursor after spray granulation process with 3 wt.% of the auxiliary agent added. Through the addition of auxiliary agents, the precursor after spray granulation can maintain better integrity of particles. Furthermore, the auxiliary agent is selected for example from a mixture of amorphous iron phosphate and lithium salts in the mass production line. In addition, the auxiliary agent has the molar ratio of Li:P =0.99~1.05:1, and the molar ratio of Fe:P=0.98~1.02:1, so that the function of the binder is provide, and the molar ratio of Li:Fe:P=0.99-1.05:0.98-1.02:1 is maintained in the precursor. In that, the recycling and reworking method is integrated into the normal mass production line. The problem of reworking of defective products is solved, and the waste caused by poor material manufacturing is also avoided. Certainly, in other embodiments, the auxiliary agent is not added into the precursor, and the present disclosure is not limited thereto.

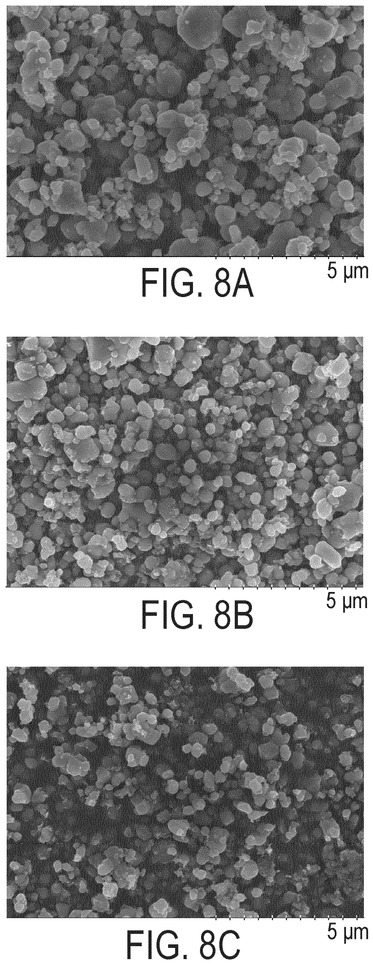

In Example 4 to Example 6, quantitative lithium iron phosphate recycled materials are oxidized at 300° C for 2 hours in the atmosphere to obtain the raw material powder, respectively. The residual carbon content of the raw material powder obtained is 0.2 wt.%. Then, the raw material powder is ground, and the lithium source and the iron source in an appropriate amount are added to adjust the composition of the raw material powder, to form a precursor before sintering. In Example 4, the precursor has an average particle diameter of about 1.15 µm. In Example 5, the precursor has an average particle diameter of about 0.75µm. In Example 6, the precursor has an average particle diameter of about 0.49 µm. FIGS. 8A to 8C are SEM photos shown the precursors before granulation in Example 4 to Example 6 of the present disclosure, respectively. In Example 4 to Example 6, each precursor contains 5 wt.% of the auxiliary agent. Moreover, the fructose is added to the precursor as a carbon source. Thereafter, the precursors with the carbon source added are heat-treated at 550°C for 4 hours and 700°C for 4 hours in an inert gas, and the lithium iron phosphate generated materials are obtained. The specific surface areas, carbon contents and electrical analysis results of Example 4 to Example 6 are shown in Table 1.

Comparing the results of lithium iron phosphate regenerated materials obtained in Example 4 to Example 6, it can be seen that when the raw material powder after grinding, or the precursor has the average particle diameter ranged from 0.4 to and 1.2 µm, it allows to obtain the lithium iron phosphate regenerated material with excellent properties. Certainly, the present disclosure is not limited thereto.

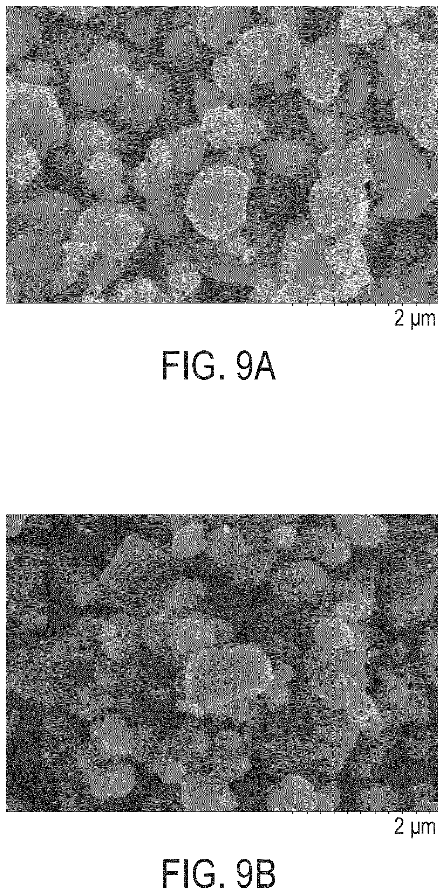

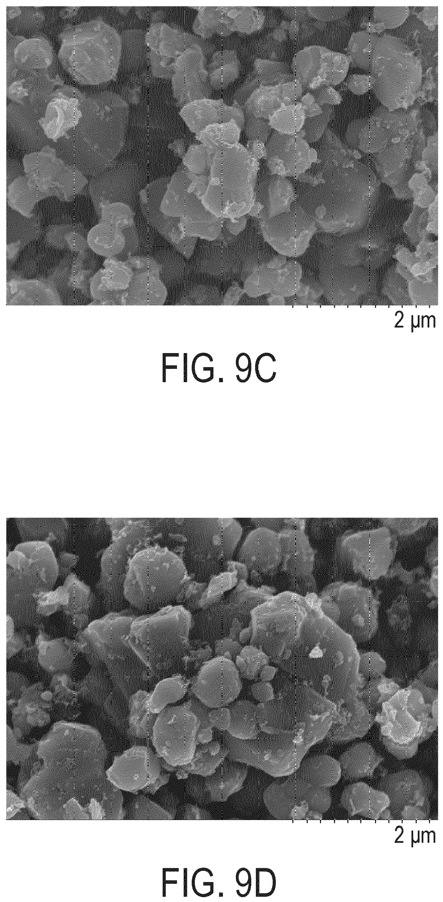

In Example 7 to Example 10, quantitative lithium iron phosphate recycled materials are oxidized at 350° C for 3 hours in the atmosphere to obtain the raw material powder, respectively. The residual carbon content of the raw material powder obtained is 0.1 wt.%. Then, the raw material powder is ground, and the lithium source and the iron source in an appropriate amount are added to adjust the composition of the raw material powder, to form a precursor before sintering. The precursor has an average particle diameter of about 0.75 µm. Each precursor contains 10 wt.% of the auxiliary agent. Moreover, the fructose is added to the precursor as a carbon source. In Example 7, the precursor with the carbon source added is heat-treated at 550°C for 4 hours and 700°C for 4 hours in an inert gas, and the lithium iron phosphate generated material is obtained. FIG. 9A is a SEM photo showing the lithium iron phosphate regenerated material obtained in Example 7 of the present disclosure. In Example 8, the precursor with the carbon source added is heat-treated at 550°C for 4 hours and 750°C for 3 hours in an inert gas, and the lithium iron phosphate generated material is obtained. FIG. 9B is a SEM photo showing the lithium iron phosphate regenerated material obtained in Example 8 of the present disclosure. In Example 9, the precursor with the carbon source added is heat-treated at 550°C for 4 hours, 700°C for 4 hours and 550°C for 4 hours in an inert gas, and the lithium iron phosphate generated material is obtained. FIG. 9C is a SEM photo showing the lithium iron phosphate regenerated material obtained in Example 9 of the present disclosure. In Example 10, the precursor with the carbon source added is heat-treated at 550°C for 4 hours, 750°C for 3 hours and 550°C for 5 hours in an inert gas, and the lithium iron phosphate generated material is obtained. FIG. 9D is a SEM photo showing the lithium iron phosphate regenerated material obtained in Example 10 of the present disclosure. The specific surface areas, carbon contents and electrical analysis results of Example 7 to Example 10 are shown in Table 1.

Comparing the results of lithium iron phosphate regenerated materials obtained in Example 7 to Example 10, it can be seen that when the precursor with the addition of carbon source is heat-treated at a sintering temperature ranged from 500°C to 800°C for 8 hours to 12 hours, it allows to obtain the desired lithium iron phosphate regenerated material with the carbon content less than 1.6 wt.%. The sintering temperature can be implemented in two or more stages. Certainly, in other embodiments, the sintering temperature is controlled to perform in one stage, and the present disclosure is not limited thereto.

In Example 11 to Example 12, quantitative lithium iron phosphate recycled materials are oxidized at 350° C for 3 hours in the atmosphere to obtain the raw material powder, respectively. The residual carbon content of the raw material powder obtained is 0.35 wt.%. Then, the raw material powder is ground, and the lithium source and the iron source in an appropriate amount are added to adjust the composition of the raw material powder, to form a precursor before sintering. The precursor has an average particle diameter of about 0.88 µm. The auxiliary agent is not added into the precursor. The fructose is added to the precursor as a carbon source. In Example 13, a quantitative lithium iron phosphate recycled materials is oxidized at 350° C for 3 hours in the atmosphere to obtain the raw material powder. The residual carbon content of the raw material powder obtained is 0.4 wt.%. Then, the raw material powder is ground, and the lithium source and the iron source in an appropriate amount are added to adjust the composition of the raw material powder, to form a precursor before sintering. The precursor has an average particle diameter of about 0.83 µm. The auxiliary agent is not added into the precursor. The fructose is added to the precursor as a carbon source. In Example 11 to Example 13, the precursors with the carbon source added are heat-treated at 550°C for 4 hours and 700°C for 4 hours in an inert gas, and the lithium iron phosphate generated materials are obtained. The specific surface areas, carbon contents and electrical analysis results of Example 11 to Example 13 are shown in Table 1. According to the results obtained in Examples 11 to Example 13, it can be seen that when the weight percentage of the residual carbon relative to the raw material powder is in the range of 0.2 wt. % to 0.4 wt. %, the addition of auxiliary agents can be omitted. Certainly, the present disclosure is not limited thereto.

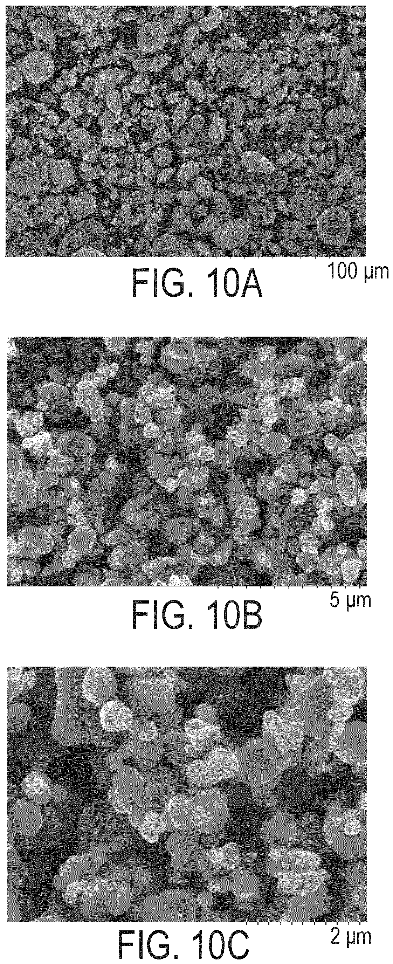

In Example 14, a quantitative lithium iron phosphate recycled material is oxidized at 350° C for 3 hours in the atmosphere. The residual carbon content of the raw material powder obtained is 0.4 wt.%. Then, the raw material powder is ground, and the lithium source and the iron source in an appropriate amount are added to adjust the composition of the raw material powder, to form a precursor before sintering. The precursor an average particle diameter of about 0.8 µm. Preferably, the precursor contains 10 wt.% of the auxiliary agent. Moreover, the rock sugar is added to the precursor as a carbon source. Thereafter, the precursor with the carbon source added is heat-treated at 550°C for 4 hours and 700°C for 4 hours in an inert gas, and the lithium iron phosphate generated material is obtained. The specific surface area, carbon content and electrical analysis results of Example 14 are shown in Table 1. Furthermore, FIGS. 10A to 10C are SEM photos showing the lithium iron phosphate regenerated material obtained in Example 14 of the present disclosure. Different from other examples, the rock sugar is added as the carbon source to the precursor in Example 14, and the lithium iron phosphate regenerated material with excellent characteristics can also be obtained. In other embodiments, the addition of the carbon source can also be replaced by a sucrose, a glucose, a cyclodextrin, a citric acid, a polyvinylpyrrolidone, a polyvinyl alcohol or a polyethylene glycol, and the present disclosure is not limited thereto.

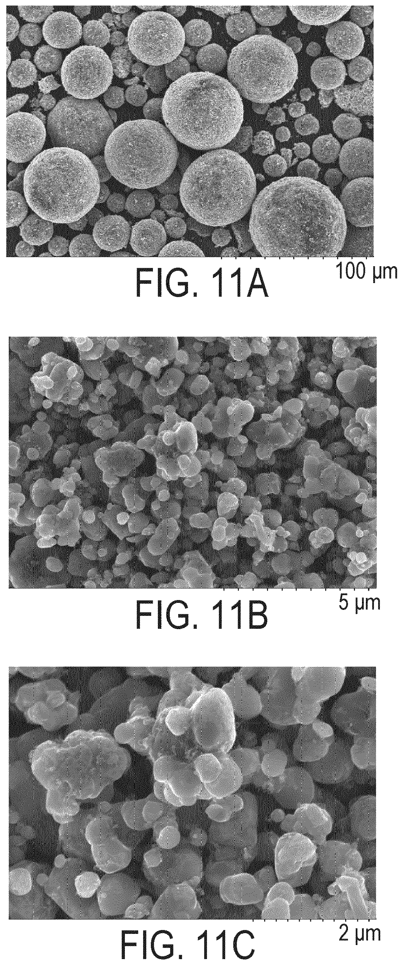

In Example 15, a quantitative lithium iron phosphate recycled material is oxidized at 350° C for 3 hours in the atmosphere. The residual carbon content of the raw material powder obtained is 0.18 wt.%. Then, the raw material powder is ground, and the lithium source and the iron source in an appropriate amount are added to adjust the composition of the raw material powder, to form a precursor before sintering. The precursor has an average particle diameter of about 0.80 µm. Preferably, the precursor contains 10 wt.% of the auxiliary agent. Moreover, the fructose is added to the precursor as a carbon source. Thereafter, the precursor with the carbon source added is heat-treated at 550°C for 4 hours and 700°C for 4 hours in an inert gas, and the lithium iron phosphate generated material is obtained. The specific surface area, carbon content and electrical analysis results of Example 15 are shown in Table 1. FIGS. 11A to 11C are SEM photos showing the lithium iron phosphate regenerated material obtained in Example 15 of the present disclosure.

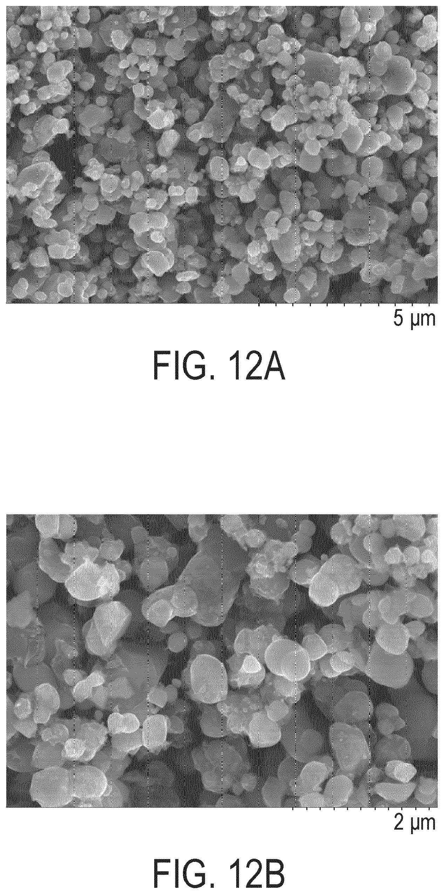

In Example 16, a quantitative lithium iron phosphate recycled material is oxidized at 350° C for 3 hours in the atmosphere. The residual carbon content of the raw material powder obtained is 0.35 wt.%. Then, the raw material powder is ground, and the lithium source and the iron source in an appropriate amount are added to adjust the composition of the raw material powder, to form a precursor before sintering. The precursor has an average particle diameter of about 0.86 µm. Preferably, the precursor contains 10 wt.% of the auxiliary agent. Moreover, the fructose is added to the precursor as a carbon source. Thereafter, the precursor with the carbon source added is heat-treated at 550°C for 4 hours and 700°C for 4 hours in an inert gas, and the lithium iron phosphate generated material is obtained. The specific surface area, carbon content and electrical analysis results of Example 16 are shown in Table 1. FIGS. 12A to 12B are SEM photos showing the lithium iron phosphate regenerated material obtained in Example 16 of the present disclosure.

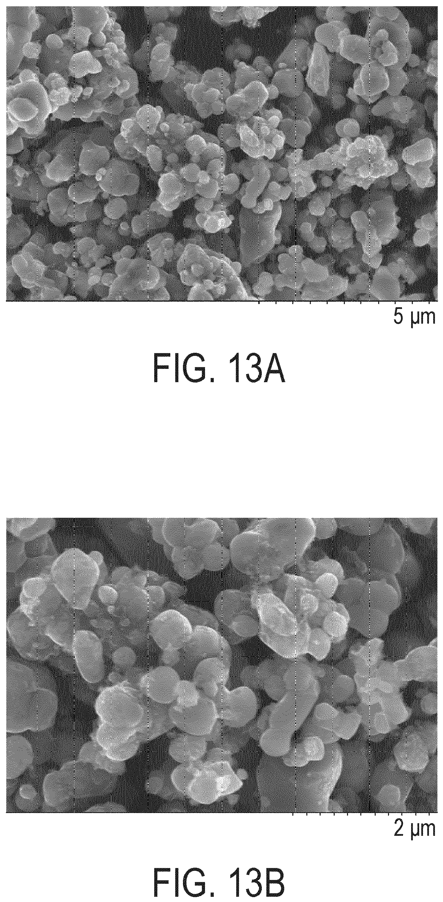

In Example 17, a quantitative lithium iron phosphate recycled material is oxidized at 350° C for 3 hours in the atmosphere. The residual carbon content of the raw material powder obtained is 0.4 wt.%. Then, the raw material powder is ground, and the lithium source and the iron source in an appropriate amount are added to adjust the composition of the raw material powder, to form a precursor before sintering. The precursor has an average particle diameter of about 0.84 µm. Preferably, the precursor contains 10 wt.% of the auxiliary agent. Moreover, the fructose is added to the precursor as a carbon source. Thereafter, the precursor with the carbon source added is heat-treated at 550°C for 4 hours and 700°C for 4 hours in an inert gas, and the lithium iron phosphate generated material is obtained. The specific surface area, carbon content and electrical analysis results of Example 17 are shown in Table 1. FIGS. 13A to 13B are SEM photos showing the lithium iron phosphate regenerated material obtained in Example 17 of the present disclosure.

In Example 18 to Example 22, quantitative lithium iron phosphate recycled materials are oxidized at 350° C for 3 hours in the atmosphere to obtain the raw material powder, respectively. The residual carbon content of the raw material powder obtained is 0.78 wt.%. Then, the raw material powder is ground, and the lithium source and the iron source in an appropriate amount are added to adjust the composition of the raw material powder, to form a precursor before sintering. Moreover, the fructose is added to the precursor as a carbon source. In Example 18, the precursor has an average particle diameter of about 0.45 µm and contains 3 wt.% of the auxiliary agent. The precursor with the carbon source added is heat-treated at 550°C for 4 hours and 700°C for 4 hours in an inert gas, and the lithium iron phosphate generated material is obtained. In Example 19, the precursor has an average particle diameter of about 0.45µm and contains 3 wt.% of the auxiliary agent. The precursor with the carbon source added is heat-treated at 750°C for 3 hours in an inert gas, and the lithium iron phosphate generated material is obtained. In Example 20, the precursor has an average particle diameter of about 0.399 µm and contains 3 wt.% of the auxiliary agent. The precursor with the carbon source added is heat-treated at 750°C for 3 hours in an inert gas, and the lithium iron phosphate generated material is obtained. In Example 21, the precursor has an average particle diameter of about 0.55 µm and contains 3 wt.% of the auxiliary agent. The precursor with the carbon source added is heat-treated at 550°C for 4 hours and 700°C for 4 hours in an inert gas, and the lithium iron phosphate generated material is obtained. In Example 22, the precursor has an average particle diameter of about 0.55 µm and contains 3 wt.% of the auxiliary agent. The precursor with the carbon source added is heat-treated at 550°C for 4 hours, 650°C for 3 hours and 700°C for 4 hours in an inert gas, and the lithium iron phosphate generated material is obtained.

According to the results of the lithium iron phosphate regenerated materials obtained in Example 18 to Example 22, it can be seen that when the precursor with the addition of carbon source is heat-treated at a sintering temperature ranged from 500°C to 800°C for 3 hours to 10 hours, it allows to obtain the desired lithium iron phosphate regenerated material with the carbon content less than 1.3 wt.%. The sintering temperature can be implemented in one, two or more stages. Preferably, the sintering time in Example 19 and Example 20 is further shortened to 3 hours. Certainly, in other embodiments, the sintering temperature and the sintering time are adjustable according to the practical requirements, and the present disclosure is not limited thereto.

On the other hand, from the analysis results of the lithium iron phosphate regenerated materials obtained in Example 1 to Example 22, it can be seen that the lithium iron phosphate regenerated materials that meet the product specifications are obtained by the recycling and reworking method of the lithium iron phosphate cathode material of the present disclosure. The specific surface area of the lithium iron phosphate regenerated materials obtained is ranged from 8 m²/g to 14.5 m²/g, and the 0.1C charge and discharge capacity is greater than 150 mAh/g, with excellent physical and electrical properties. Certainly, the recycling and reworking method of the lithium iron phosphate cathode material in the present disclosure can produce the lithium iron phosphate regenerated materials with the required product specifications through the adjustment of the aforementioned many process parameters. Certainly, the present disclosure is not limited thereto.

In summary, the present disclosure provides a recycling and reworking method of a lithium iron phosphate cathode material for a secondary battery. The defective products in the recycling or mass production process are regenerated and remanufactured to generate the lithium iron phosphate regenerated materials that meet the product specifications, avoid the material waste, and reach the value of recycling the lithium iron phosphate cathode material. Since the defective semi-finished products or the defective finished products are recycled or taken from the mass production process, the resynthesized materials are greatly affected by the composition purity and the residual carbon content of the lithium iron phosphate. In the present disclosure, the raw powder easy to control is formed through an oxidation step in an atmospheric atmosphere. Preferably, the residual carbon content of the oxidized raw material powder is reduced to range from 0.07 wt. % to 0.6 wt. %, and the proportion of lithium, iron, and phosphorus components in the raw material powder resynthesized is not affected. The raw material powder oxidized with the reduced residual carbon content, is further produced through grinding and dispersing, component adjustment, granulation, sintering and other processes to form lithium iron phosphate regenerated materials, which meet the specification requirements of the lithium iron phosphate cathode material for the secondary battery. Furthermore, a mixture of amorphous iron phosphate and lithium salt is added as an auxiliary agent. It is more helpful to improve the powder fluidity of the precursor after spray granulation. On the other hand, when the residual carbon content of the raw material powder is ranged from 0.2 wt.% to 0.4 wt.%, the addition of auxiliary agent can also be omitted. After the precursor is subjected to a two-stage high-temperature sintering process, the lithium iron phosphate regenerated material is formed to meet the product specifications, and the required carbon coating content of less than 1.6 wt.% is obtained at the same time. The lithium iron phosphate materials out of product specifications are regenerated and produced through the powder oxidation, grinding and dispersing, composition adjustment, drying, sintering and other processes in the present disclosure, to form the lithium iron phosphate regenerated materials meeting the product specifications, and the required carbon coating content less than 1.6 wt. % is obtained at the same time. The grinding and dispersing, drying, and sintering for the lithium iron phosphate regenerated materials can be combined with the actual mass production process for the regular lithium iron phosphate cathode material on the mass production line. In this way, the recycling and reworking are completed with the minimum production cost. The product yield of the lithium iron phosphate cathode material is improved, and the waste of materials or the problem of environmental pollution is avoided. The lithium iron phosphate regenerated materials that meet product specifications are further commercialized by sieving, crushing, self-mixing and electromagnetic separation to enhance product competitiveness.

## Claims

1. A recycling and reworking method of a lithium iron phosphate cathode material, **characterized by** comprising steps of:
(a) providing a lithium iron phosphate recycled material;
(b) oxidizing the lithium iron phosphate recycled material in an atmosphere, wherein the lithium iron phosphate recycled material is treated at an oxidation temperature ranged from 300°C to 400°C for 1 hour to 5 hours to form a raw material powder, wherein the raw material powder is composed of LiFePO₄, Fe₇(PO₄)₆, Fe₂O₃ and a residual carbon, and the weight percentage of the residual carbon in the raw material powder is ranged from 0.07 wt.% to 0.6 wt.%;
(c) grinding the raw material powder;
(d) adjusting the composition of the raw material powder to form a precursor, which has the molar ratio of Li:P = 0.99-1.05:1, and the molar ratio of Fe:P= 0.98-1.02:1, wherein a carbon source is added; and
(e) heat-treating the precursor in an inert gas at a sintering temperature ranged from 500° C to 800° C for 8 hours to 12 hours to form a lithium iron phosphate regenerated material.

2. The recycling and reworking method of the lithium iron phosphate cathode material according to claim 1, wherein the raw material power after grinding in the step (c) has an average particle diameter ranged from 0.4 µm to 1.2 µm.

3. The recycling and reworking method of the lithium iron phosphate cathode material according to claim 1, wherein the step (d) further comprises a step of: (d1) adding an auxiliary agent, wherein the auxiliary agent has a weight percentage ranged from 3 wt.% to 15 wt.% relative to the precursor.

4. The recycling and reworking method of the lithium iron phosphate cathode material according to claim 3, wherein the auxiliary agent has the molar ratio of Li:P = 0.99-1.05:1, and the molar ratio of Fe:P= 0.98-1.02:1.

5. The recycling and reworking method of the lithium iron phosphate cathode material according to claim 3, wherein the auxiliary agent is a mixture of amorphous iron phosphate and lithium salt.

6. The recycling and reworking method of the lithium iron phosphate cathode material according to claim 1, wherein the sintering temperature comprises a first sintering temperature and a second sintering temperature, the precursor is treated at the first sintering temperature for 3 hours to 5 hours and then treated at the second sintering temperature for 3 hours to 5 hours to form the lithium iron phosphate regenerated material, the first sintering temperature is ranged from 500°C to 600°C, and the second sintering temperature is ranged from 700°C to 800°C.

7. The recycling and reworking method of the lithium iron phosphate cathode material according to claim 1, wherein the lithium iron phosphate regenerated material has a carbon content less than or equal to 1.6 wt.%.

8. The recycling and reworking method of the lithium iron phosphate cathode material according to claim 1, wherein the step (b) further comprises a step of (b1) analyzing the weight percentage of Li, Fe, P and the residual carbon in the raw material powder.

9. The recycling and reworking method of the lithium iron phosphate cathode material according to claim 1, wherein the step (c) is implemented through a wet grinding process, and the step (d) further comprises a step of (d1) drying the precursor.

10. The recycling and reworking method of the lithium iron phosphate cathode material according to claim 9, wherein the weight percentage of the residual carbon in the raw material powder is ranged from 0.2 wt.% to 0.4 wt.%, and the step (d1) is implemented through a spray granulation process.

11. The recycling and reworking method of the lithium iron phosphate cathode material according to claim 1, wherein the carbon source is one selected from the group consisting of a fructose, a rock sugar, a sucrose, a glucose, a cyclodextrin, a citric acid, a polyvinylpyrrolidone, a polyvinyl alcohol, a polyethylene glycol and a combination thereof.
